# FASCICULE DE BREVET EUROPEEN

(11) **EP 0 559 527 B1**
(45) Date de publication et mention de la délivrance du brevet: **26.04.1995**
(21) Numéro de dépôt: 93400492.0
(22) Date de dépôt: 25.02.1993
(51) Int. Cl.: B23K 11/16

(54) **Procédé et dispositif de soudage électrique de tôles de structure multicouche**
Vorrichtung und Verfahren zum elektrischen Schweissen vielschichtiges Blechen
Method and apparatus for electric welding multilayered sheet material

(30) Priorité: 05.03.1992 FR 9202666
(43) Date de publication de la demande: 08.09.1993
(73) Titulaire: SOLLAC, 92800 Puteaux (FR)
(72) Inventeur: Gissinger, Franck, F-59240 Dunkerque (FR); Gheysens, Thierry, F-59670 Oudezeele (FR)
(74) Mandataire: Lanceplaine, Jean-Claude

(56) Documents cités:
- FR-A- 2 638 668
- PATENT ABSTRACTS OF JAPAN vol. 7, no. 199 (M-240)3 Septembre 1983 & JP-A-58 097 486 (TOYOTA JIDOSHA KOGYO) 9 Juin 1983.

## Description

La présente invention est relative à un procédé de soudage électrique de tôles à structure multicouche dites tôles sandwichs ainsi qu'à un dispositif de mise en oeuvre de ce procédé.

Dans diverses industries et notamment l'industrie automobile, on utilise des tôles dites sandwichs, par exemple pour fabriquer les carters des moteurs et les planchers de véhicules automobiles en vue d'une isolation acoustique.

Les tôles dites sandwichs sont formées d'une structure multicouche dans laquelle deux tôles métalliques sont liées entre elles par un film de polymère qui est un isolant électrique.

Jusqu'à présent, pour souder ensemble deux tôles sandwichs, on procède d'abord à leur recouvrement total, c'est à dire à leur superposition, puis on les insère entre deux électrodes dites supérieure et inférieure en cuivre ou en alliage de cuivre disposées suivant un axe de soudage qui est perpendiculaire aux faces de plus grandes dimensions des tôles sandwichs.

Pour que le courant électrique circule d'une électrode à l'autre, la tôle de la première structure multicouche qui est en regard de l'électrode supérieure est reliée électriquement par un pontet à la tôle de la seconde structure multicouche qui est en regard de l'électrode inférieure de façon à créer un courant de by-pass d'une tôle à l'autre.

Au cours de l'opération de soudage, les deux structures multicouches sont serrées l'une contre l'autre par un effort déterminé, exercé par les électrodes et, simultanément, un courant électrique circule d'une électrode à l'autre.

Le passage d'un courant électrique de forte intensité dans les tôles, à savoir de l'ordre de 15KA sous une différence de potentiel de 2 volts, crée par effet Joule un échauffement dans les deux structures multicouches ce qui tend à ramollir les films de polymère.

Sous l'action des contraintes thermiques et mécaniques, on observe, d'une part, le fluage du polymère et, d'autre part, lorsque les tôles d'une même structure multicouche entrent en contact, le passage du courant.

En raison de la présence d'une résistance ohmique à l'interface des tôles, il se produit un échauffement localisé qui provoque la fusion du métal et l'apparition d'un point de soudure à chaque interface après coupure du courant et solidification du noyau fondu.

Si l'intensité du courant est très élevée et si le soudage est effectué rapidement, il se crée un seul point de soudure au lieu de trois.

Cependant, ce procédé de soudage n'est pas satisfaisant pour les applications envisagées dans l'industrie automobile étant donné qu'il ne permet pas de souder les tôles de structure multicouche mises bout à bout.

Le document JP-A-58-97486 décrit un procédé de soudage électrique de tôles sandwichs selon lequel on effectue un recouvrement partiel des tôles sandwichs, on met en contact les faces dites internes des tôles sandwichs sur ladite zone de recouvrement, on applique sur les faces opposées dites externes des tôles sandwichs deux éléments de pression qui exercent un effort de serrage sur la zone de recouvrement des tôles sandwichs, et on applique des électrodes sur les faces internes desdites tôles.

La présente invention vise à remédier à cet inconvénient en proposant un procédé et un dispositif de soudage électrique particulièrement adaptés aux tôles sandwichs et à leur utilisation dans l'industrie automobile.

La présente invention a ainsi pour objet un procédé de soudage électrique d'au moins deux tôles à structures multicouches dites sandwichs, formées chacune d'au moins deux tôles métalliques liées entres elles par un film de polymère, selon lequel:
- on effectue un recouvrement partiel desdites tôles sandwichs,
- on met en contact les faces dites internes des tôles sandwichs sur ladite zone de recouvrement,
- on applique sur les faces opposées dites externes des tôles sandwichs au moins deux molettes formées chacune de deux parties et placées en regard l'une de l'autre au droit de la zone de recouvrement, une première partie de chaque molette reposant par sa surface de contact sur la face externe de l'une desdites tôles sandwichs, une seconde partie de chaque molette, en relief par rapport à ladite première partie étant électriquement conductrice et disposée en vis à vis de la face interne de l'autre desdites tôles sandwichs,
- on alimente électriquement au moins la seconde partie de chaque molette,
- on exerce par l'intermédiaire des molettes un effort de serrage sur la zone de recouvrement des tôles sandwichs pour amener la seconde partie de chacune desdites molettes en contact avec la face interne de la tôle sandwich disposée en vis à vis, et on déplace lesdites molettes le long de la zone de recouvrement.

Selon d'autres caractéristiques de l'invention :
- la première partie de chaque molette est également électriquement conductrice,
- la première partie de chaque molette est électriquement isolée,
- on exerce préalablement à l'application des premières parties des molettes sur les faces externes des tôles sandwichs, un effort de flexion sur l'extrémité d'une tôle sandwich opposée à la zone de recouvrement, pour amener lesdites tôles sandwich dans un même plan,
- la zone de recouvrement a une largeur comprise entre 1,5 et 2 fois l'épaisseur d'une tôle sandwich.

La présente invention a également pour objet un dispositif de soudage électrique d'au moins deux tôles de structure multicouche dites tôles sandwichs, pour la mise en oeuvre du procédé mentionné ci-dessus, comprenant:
- au moins deux molettes comportant chacune une première partie destinée à être appliquée sur la face dite externe de l'une des tôles sandwichs et une seconde partie en relief par rapport à la première partie, électriquement conductrice et destinée à être mise en contact avec la face opposée dite face interne de l'autre des tôles sandwichs, lesdites tôles sandwichs étant en recouvrement partiel et lesdites molettes étant placées en regard l'une de l'autre au droit de la zone de recouvrement des tôles sandwichs,
- des moyens d'alimentation électrique d'au moins la seconde partie de chaque molette,
- des moyens d'entraînement en rotation de chaque molette,
- et des moyens de déplacement des molettes perpendiculairement auxdites tôles sandwichs.

Selon d'autres caractéristiques de l'invention :
- la première partie de chaque molette est également électriquement conductrice,
- la première partie de chaque molette est électriquement isolée,
- la seconde partie de la première molette est formée sur un bord périphérique de ladite première molette et la seconde partie de la seconde molette est formée sur le bord périphérique opposé de ladite seconde molette,
- les deux parties de chacune des molettes ont une forme générale sensiblement cylindrique,
- la seconde partie de chaque molette a une largeur sensiblement égale au tiers de la largeur de la molette correspondante,
- la seconde partie de chaque molette a un diamètre supérieur d'environ 0,30mm au diamètre de la première partie de la molette correspondante,
- la seconde partie de chaque molette forme au moins un épaulement.

D'autres caractéristiques et avantages de la présente invention apparaîtront au cours de la description qui va suivre, donnée uniquement à titre d'exemple et faite en référence aux dessins annexés, sur lesquels:
- la Fig. 1 est une vue schématique en perspective du dispositif de soudage électrique selon l'invention,
- les Fig. 2 à 4 sont des vues schématiques partielles en élévation du dispositif montrant les différentes étapes de soudage de deux tôles à structure multicouche.

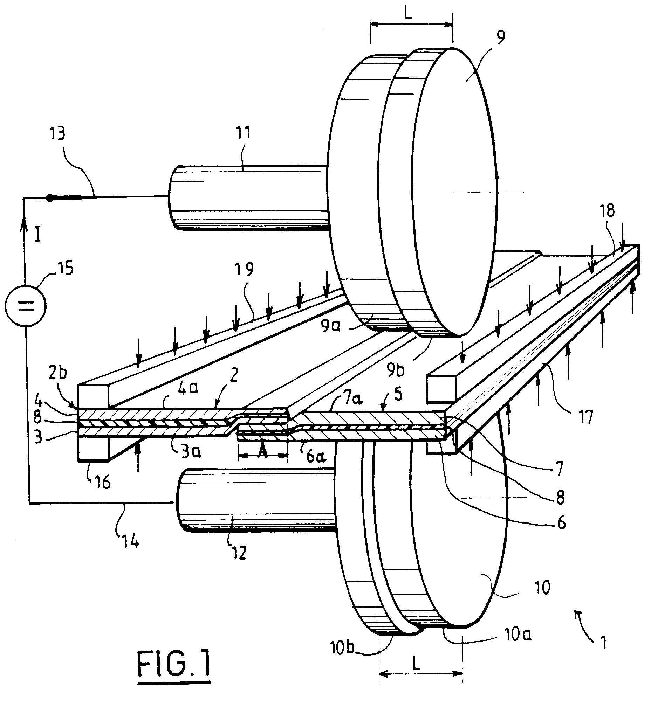

Le dispositif représenté à la Fig. 1 est désigné dans son ensemble par la référence 1 et est adapté au soudage électrique de deux tôles 2 et 5 de structure multicouche appelées tôles sandwichs.

Chacune de ces tôles sandwichs 2 et 5 est formée de deux tôles respectivement 3, 4 et 6, 7 d'épaisseur égale à 0,35 mm et liées entre elles par un film de polymère 8 d 'épaisseur par exemple égale à 0,05mm.

L'épaisseur totale de chaque tôle sandwich 2 et 5 est égale à 0,75mm dans ce mode de réalisation.

Ces tôles sandwichs 2 et 5 sont partiellement superposées sur une zone de recouvrement A de façon à amener en contact une partie de la face 3a dite interne de la tôle sandwich 2 avec une partie de la face 7a dite interne de la tôle sandwich 5 et cela sur toute la longueur desdites tôles sandwich 2 et 5.

La zone de recouvrement A a une largeur comprise entre 1,5 et 2 fois l'épaisseur d'une tôle sandwich 2 ou 5, c'est à dire dans cet exemple de réalisation une largeur égale à 1,5mm.

Le dispositif de soudage comprend deux molettes 9 et 10 de largeur L.

Chacune des molettes 9 et 10 est portée par un arbre d'entraînement respectivement 11 et 12 accouplé à un moteur, non représenté, d'entraînement en rotation de chacune desdites molettes à une vitesse linéaire environ égale à 3m/mn.

Les arbres 11 et 12 sont reliés électriquement par une connexion électrique 13 et 14 alimentée par un générateur 15 et qui se prolonge axialement dans lesdits arbres 11 et 12 jusqu'aux molettes 9 et 10.

Le générateur 15 délivre un courant électrique d'intensité par exemple à 10 KA sous une tension de 1V, le passage du courant électrique dans les molettes 9 et 10 et les tôles sandwichs 2 et 5 étant symbolisées sur les figures par la ligne référencée I.

Un circuit, non représenté, d'eau de refroidissement est prévu à l'intérieur des molettes 9 et 10 pour empêcher la détérioration de leur surface de contact.

Les deux molettes 9 et 10 sont disposées de part et d'autre des deux tôles sandwichs 2 et 5 superposées et en regard l'une de l'autre.

Ainsi, la molette supérieure 9 est placée en regard de la tôle sandwich supérieure 2 et symétriquement par rapport à la zone de recouvrement A.

La molette inférieure 10 est placée en regard de la tôle sandwich inférieure 5 et symétriquement par rapport à la zone de recouvrement A.

La molette supérieure 9 comporte une première partie 9a de forme générale cylindrique destinée à être appliquée sur la face 4a dite externe de la tôle sandwich 2 et une seconde partie 9b de forme générale cylindrique en relief par rapport à ladite première partie 9a est destinée à être mise en contact avec la face opposée 7a dite face interne de la tôle sandwich 5.

La molette inférieure 10 comporte une première partie 10a de forme générale cylindrique destinée à être appliquée sur la face 6a dite externe de la tôle sandwich 5 et une seconde partie 10b de forme générale cylindrique en relief par rapport à ladite première partie 10a et destinée à être mise en contact avec la face opposée 3a dite face interne de la tôle sandwich 2.

Les secondes parties en relief 9b et 10b sont symétriques et la seconde partie en relief 10b de la molette inférieure 10 est formée sur un bord périphérique de cette molette tandis que la seconde partie en relief 9b de la molette supérieure 9 est formée sur un bord périphérique opposé au bord périphérique de la molette inférieure 10 comportant la seconde partie en relief 10b.

Ainsi disposé symétriquement par rapport à la zone de recouvrement A, les molettes 9 et 10 n'entrent pas en contact avec la face interne 3a et 7a des tôles sandwichs 2 et 5.

La seconde partie 9b et 10b de chaque molette respectivement 9 et 10 a une largeur sensiblement égale au tiers de la largeur L de la molette (9, 10) correspondante et a un diamètre supérieur d'environ 0,30mm au diamètre de la première partie (9a, 10a) de ladite molette (9, 10) correspondante.

La surface de contact de chaque seconde partie en relief 9b et 10b est choisie avantageusement pour que la résistance de contact entre cette surface et la face interne 3a et 7a de la tôle sandwich en vis-à-vis ne soit pas trop forte.

En effet, une résistance de contact trop forte générerait un échauffement intempestif de la tôle sandwich et une détérioration de sa surface.

La seconde partie en relief 9b et 10b de chaque molette respectivement 9 et 10 forme au moins un épaulement.

Les molettes cylindriques 9 et 10 peuvent être déplacées l'une vers l'autre ou écartées l'une de l'autre par des moyens de déplacement non représentés, constitués par des vérins hydrauliques.

D'autre part, le dispositif comprend un banc de bridage destiné à maintenir les tôles sandwichs 2 et 5 appliquées l'une sur l'autre dans leur position de recouvrement partiel.

Ce banc de bridage est constitué par quatre barres 16, 17, 18 et 19 de plaquage des tôles sandwichs 2 et 5 et disposées de part et d'autre de l'ensemble formé par les deux molettes 9 et 10 et contre chaque face respectivement 3a, 4a, 6a et 7a desdites tôles sandwichs.

Selon un premier mode de réalisation de l'invention, les deux parties 9a, 9b, 10a et 10b de chaque molette respectivement 9 et 10 sont électriquement conductrices.

Les molettes 9 et 10 sont réalisées en un matériau conducteur tel qu'un alliage de cuivre, chrome et zirconium.

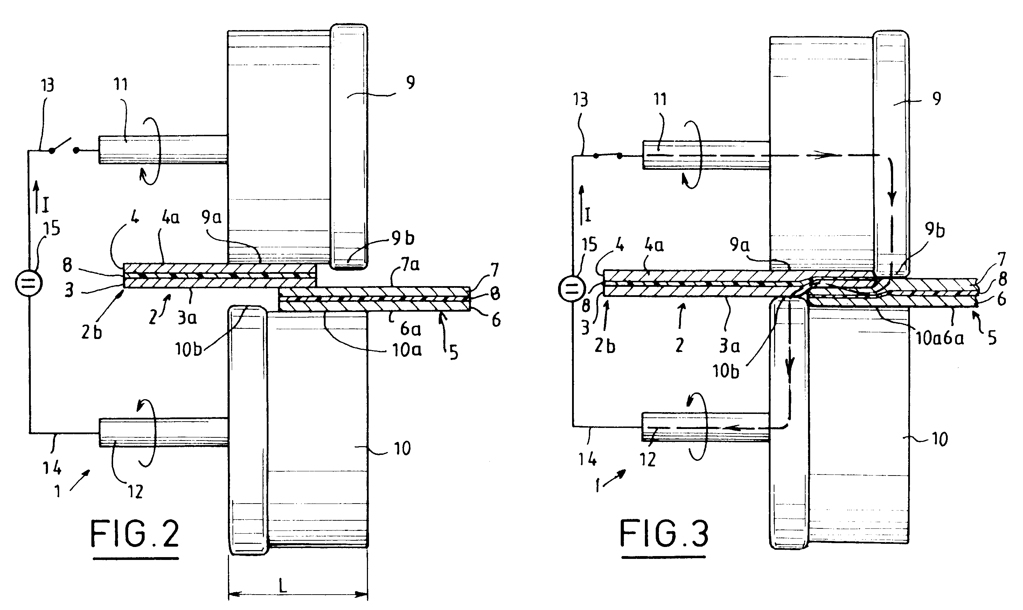

Tout d'abord, on effectue un recouvrement partiel des deux tôles sandwichs 2 et 5 et on met en contact les faces 3a et 7a dites internes des tôles sandwichs 2 et 5 dans la zone de recouvrement A (Fig. 2).

Ensuite, on pince les deux tôles sandwichs 2 et 5 entre les quatre barres 16, 17, 18 et 19.

Afin d'utiliser les tôles sandwichs 2 et 5 par exemple pour la réalisation de carters de moteurs de véhicules automobiles, il est nécessaire que lesdites tôles sandwichs se retrouvent dans un même plan horizontal après l'opération de soudage.

A cet effet, on exerce un effort de flexion par exemple sur l'extrémité 2b de la tôle sandwich supérieure 2 opposée à celle participant au recouvrement, cet effort étant dirigé vers le bas et la flèche résultante étant égale à l'épaisseur d'une tôle sandwich (Fig. 3).

A la suite de cette opération, on applique les molettes 9 et 10 sur les tôles sandwichs 2 et 5 de telle manière que la première partie 9a et 10a de chaque molette 9 et 10 entre en contact respectivement avec la face externe 4a de la tôle sandwich 2 et avec la face externe 6a de la tôle sandwich 5.

L'effort de serrage appliqué sur les tôles sandwichs 2 et 5 par l'intermédiaire des premières parties 9a et 10a des molettes 9 et 10 provoque un écrasement desdites tôles sandwichs au droit de la zone de recouvrement A jusqu'à ce que les secondes parties en relief 9b et 10b respectivement des molettes 9 et 10 entrent en contact avec les faces internes respectivement 7a et 3a des tôles sandwichs 5 et 2 (Fig.3).

Le courant électrique emprunte alors le chemin qui va de la molette supérieure 9 à la molette inférieure 10 en passant successivement par la face interne 7a de la tôle sandwich inférieure 5, l'interface de la zone de recouvrement A et la face interne 3a de la tôle sandwich supérieure 2 (Fig. 3).

La résistance ohmique de l'interface étant plus élevée que les résistances de contact entre les molettes 9 et 10 et les faces internes 3a et 7a des tôles sandwichs 2 et 5, le passage du courant produit un échauffement par effet Joule qui se propage par conduction vers les films de polymère 8 des deux tôles sandwichs 2 et 5, conduisant ainsi au fluage desdits films 8 et au contact électrique entre les deux tôles 3, 4 et 5, 7 de chaque tôle sandwich 2 et 5.

De manière avantageuse, le procédé selon l'invention permet, de par la présence des secondes parties 9b et 10b en relief, de s'opposer à l'éjection du polymère des tôles sandwichs 2 et 5 lors de l'écrasement et donc de ne pas altérer le contact électrique.

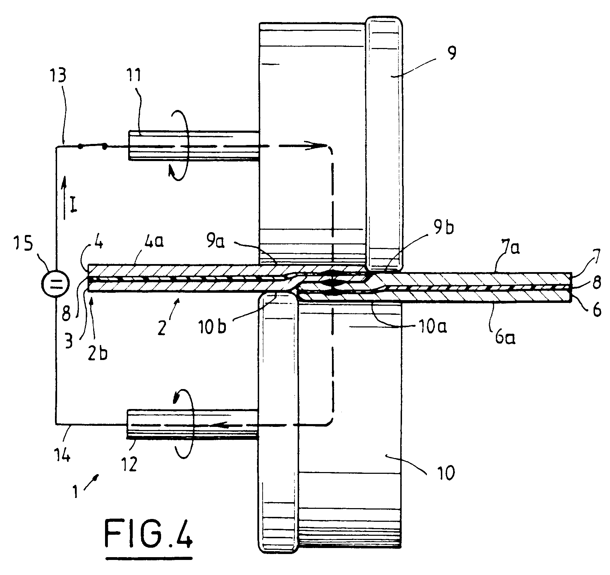

Les molettes 9 et 10 se déplacent le long de la zone de recouvrement A et le soudage s'effectue alors à l'interface entre les deux faces internes 3a et 7a des tôles sandwichs et à chaque interface tôle/tôle d'une même tôle sandwich, par fusion du métal et création d'un noyau fondu (Fig. 4).

L'effort de soudage est d'environ égal à 300 DaN pour une vitesse de soudage voisine de 3 m/mm.

Après coupure du courant et solidification du noyau, on crée ainsi trois cordons de soudure parallèles ou un seul cordon à condition que l'on ait utilisé une forte intensité de courant.

Selon un second mode de réalisation de l'invention, les premières parties 9a et 10a de chaque molette 9 et 10 sont électriquement isolées tandis que les secondes parties 9b et 10b en relief sont électriquement conductrices.

Pour isoler électriquement les premières parties 9a et 10a de chaque molette 9 et 10 il est possible de les réaliser en un alliage à base de cuivre et de revêtir leur surface destinée à être appliquée respectivement sur les faces externes 4a et 6a des tôles sandwichs 2 et 5.

On peut également réaliser ces parties 9a et 10a en un alliage à base de cuivre, n'alimenter en courant électrique que les secondes parties 9b et 10b des molettes 9 et 10 et interposer respectivement entre la première partie 9a et 10a et la seconde partie 9b et 10b de chaque molette 9 et 10, un disque de matériau électriquement isolant tel que la bakélite.

On peut encore réaliser les parties 9a et 10a de chaque molette 9 et 10 en un matériau électriquement isolant ou à très haute résistivité électrique.

Les connexions électriques 13 et 14 alimentées par un générateur 15 se prolongent dans les arbres 11 et 12 jusqu'aux secondes parties 9b et 10b en relief de chacune des molettes 9 et 10.

Le procédé de soudage de ce seconde mode de réalisation est sensiblement identique à celui qui vient d'être décrit pour le premier mode de réalisation en référence aux Figs. 2 à 4.

La principale caractéristique de ce mode de réalisation est liée au fait que l'on effectue une dérive permanente du courant électrique dans les secondes parties 9b, 10b en relief de chaque molette 9 et 10 et qu'ainsi les fonctions de serrage et de soudage sont dissociées.

Avantageusement, la présente invention permet de réaliser une soudure étanche et d'une grande fiabilité, contrairement au procédé de l'art antérieur qui utilisait le soudage par résistance par points.

## Revendications

1. Procédé de soudage électrique d'au moins deux tôles (2, 5) à structure multicouche dites tôles sandwichs formées chacune d'au moins deux tôles métalliques (3, 4 et 6, 7) liées entre elles par un film de polymère (8), procéde selon lequel
on effectue un recouvrement partiel des tôles sandwichs (2, 5) et
on met en contact les faces (3a, 7a) dites internes des tôles sandwichs (2, 5) sur ladite zone de recouvrement,
caractérisé en ce que :
- on applique sur les faces opposées (4a, 6a) dites externes des tôles sandwichs (2, 5) au moins deux molettes (9, 10) formées chacune de deux parties et placées en regard l'une de l'autre au droit de la zone de recouvrement, une première partie (9a, 10a) de chaque molette (9, 10) reposant par sa surface de contact sur la face externe (4a, 6a) de l'une desdites tôles sandwichs (2, 5), une seconde partie (9b, 10b) de chaque molette, en relief par rapport à ladite première partie (9a, 10a) étant électriquement conductrice et disposée en vis à vis de la face interne (7a, 3a) de l'autre desdites tôles sandwichs (5, 2),
- on alimente électriquement au moins la seconde partie (9b, 10b) de chaque molette (9, 10),
- on exerce par l'intermédiaire des molettes (9, 10) un effort de serrage sur la zone de recouvrement des tôles sandwichs (2, 5) pour amener la seconde partie (9b, 10b) de chacune desdites molettes (9, 10) en contact avec la face interne (7a, 3a) de la tôle sandwich (5, 2) disposée en vis à vis,
- et on déplace lesdites molettes (9, 10) le long de la zone de recouvrement.

2. Procédé selon la revendication 1, caractérisé en ce que la première partie (9a, 10a) de chaque molette (9, 10) est également électriquement conductrice.

3. Procédé selon la revendication 1, caractérisé en ce que la première partie (9a, 10a) de chaque molette (9, 10) est électriquement isolée.

4. Procédé selon l'une quelconque des revendications précédentes, caractérisé en ce que l'on exerce préalablement à l'application des premières parties (9a, 10a) des molettes (9, 10) sur les faces externes (4a, 6a) des tôles sandwichs (2, 5) un effort de flexion sur l'extrémité d'une tôle sandwich opposée à la zone de recouvrement, pour amener lesdites tôles sandwichs dans un même plan.

5. Procédé selon la revendication 1, caractérisé en ce que la zone de recouvrement a une largeur comprise entre 1,5 et 2 fois l'épaisseur d'une tôle sandwich (2, 5).

6. Dispositif de soudage électrique d'au moins deux tôles (2, 5) de structure multicouche dites tôles sandwichs, pour la mise en oeuvre du procédé selon l'une quelconque des revendications 1 à 5, comprenant:
- au moins deux molettes (9, 10) comportant chacune une première partie (9a, 10a) destinée à être appliquée sur la face (4a, 6a) dite externe de l'une des tôles sandwichs (2, 5) et une seconde partie (9b, 10b) en relief par rapport à la première partie (9a, 10a), électriquement conductrice et destinée à être mise en contact avec la face opposée (7a, 3a) dite face interne de l'autre des tôles sandwichs (5, 2), lesdites tôles sandwichs étant en recouvrement partiel et lesdites molettes étant placées en regard l'une de l'autre au droit de la zone de recouvrement des tôles sandwich (2, 5),
- des moyens (15) d'alimentation électrique d'au moins la seconde partie (9b, 10b) de chaque molette (9, 10),
- des moyens (11, 12) d'entraînement en rotation de chaque molette (9, 10),
- et des moyens de déplacement des molettes (9, 10) perpendiculairement auxdites tôles sandwichs.

7. Dispositif selon la revendication 6, caractérisé en ce que la première partie (9a, 10a) de chaque molette (9, 10) est également électriquement conductrice.

8. Dispositif selon la revendication 6, caractérisé en ce que la première partie (9a, 10a) de chaque molette (9, 10) est électriquement isolée.

9. Dispositif selon la revendication 6, caractérisé en ce que la seconde partie (9b) de la première molette (9) est formée sur un bord périphérique de ladite première molette (9) et la seconde partie (10b) de la seconde molette (10) est formée sur un bord périphérique opposé de ladite seconde molette (10).

10. Dispositif selon l'une des revendications 6 à 9, caractérisé en ce que les deux parties (9a, 9b, 10a, 10b) de chacune des molettes (9, 10) ont une forme générale sensiblement cylindrique.

11. Dispositif selon la revendication 10, caractérisé en ce que la seconde partie (9b, 10b) de chaque molette (9, 10) a une largeur sensiblement égale au tiers de la largeur de la molette (9, 10) correspondante.

12. Dispositif selon l'une des revendications 10 et 11, caractérisé en ce que la seconde partie (9b, 10b) de chaque molette (9, 10) a un diamètre supérieur d'environ 0,30mm au diamètre de la première partie (9a, 10a) de la molette correspondante.

13. Dispositif selon l'une des revendications 6 à 12, caractérisé en ce que la seconde partie (9b, 10b) de chaque molette (9, 10) forme au moins un épaulement.

## Claims

1. Process for the electric welding of at least two sheets (2, 5) with a multilayered structure, the said sandwich sheets each formed by at least two metal sheets (3, 4 and 6, 7) connected together by a polymer film (8), a process according to which a partial overlapping of the sandwich sheets (2, 5) is effected, and the so-called inner faces (3a, 7a) of the sandwich sheets (2, 5) are brought into contact over the said overlap area,
characterised in that:
- there are applied to the opposite so-called outer faces (4a, 6a) of the sandwich sheets (2, 5) at least two wheels (9, 10) each formed by two parts and positioned opposite each other in line with the overlap area, a first part (9a, 10a) of each wheel (9, 10) resting through its contact surface on the outer face (4a, 6a) of one of the sandwich sheets (2, 5), a second part (9b, 10b) of each wheel, projecting with respect to the said first part (9a, 10a) being electrically conductive and disposed facing the inner face (7a, 3a) of the other one of the said sandwich sheets (5, 2),
- at least the second part (9b, 10b) of each wheel (9, 10) is fed electrically,
- through the wheels (9, 10), a clamping force is exerted on the overlap area of the sandwich sheets (2, 5) in order to bring the second part (9b, 10b) of each of the said wheels (9, 10) into contact with the inner face (7a, 3a) of the sandwich sheet (5, 2) disposed opposite, and
- the said wheels (9, 10) are moved along the overlap area.

2. Process according to Claim 1, characterised in that the first part (9a, 10a) of each wheel (9, 10) is also electrically conductive.

3. Process according to Claim 1, characterised in that the first part (9a, 10a) of each wheel (9, 10) is electrically insulated.

4. Process according to any one of the preceding claims, characterised in that, prior to the application of the first parts (9a, 10a) of the wheels (9, 10) to the outer faces (4a, 6a) of the sandwich sheets (2, 5), a bending force is exerted on the end of a sandwich sheet opposite to the overlap area, in order to bring the said sandwich sheets into the same plane.

5. Process according to Claim 1, characterised in that the overlap area has a width of between 1.5 and 2 times the thickness of a sandwich sheet (2, 5).

6. Device for the electric welding of at least two sheets (2, 5) with a multilayered structure, referred to as sandwich sheets, for implementing the process according to any one of Claims 1 to 5, comprising:
- at least two wheels (9, 10) each having a first part (9a, 10a) intended to be applied to the so-called outer face (4a, 6a) of one of the sandwich sheets (2, 5) and a second part (9b, 10b) projecting with respect to the first part (9a, 10a), electrically conductive and intended to be brought into contact with the opposite so-called inner face (7a, 3a) of the other one of the sandwich sheets (5, 2), the said sandwich sheets overlapping partially and the said wheels being positioned opposite each other in line with the overlap area of the sandwich sheets (2, 5),
- means (15) for electrically feeding at least the second part (9b, 10b) of each wheel (9, 10),
- means (11, 12) for rotating each wheel (9, 10), and
- means for moving the wheels (9, 10) perpendicularly to the said sandwich sheets.

7. Device according to Claim 6, characterised in that the first part (9a, 10a) of each wheel (9, 10) is also electrically conductive.

8. Device according to Claim 6, characterised in that the first part (9a, 10a) of each wheel (9, 10) is electrically insulated.

9. Device according to Claim 6, characterised in that the second part (9b) of the first wheel (9) is formed on a peripheral edge of the said first wheel (9), and the second part (10b) of the second wheel (10) is formed on an opposite peripheral edge of the said second wheel (10).

10. Device according to one of Claims 6 to 9, characterised in that the two parts (9a, 9b, 10a, 10b) of each of the wheels (9, 10) have an overall shape which is substantially cylindrical.

11. Device according to Claim 10, characterised in that the second part (9b, 10b) of each wheel (9, 10) has a width which is substantially equal to one third of the width of the corresponding wheel (9, 10).

12. Device according to one of Claims 10 and 11, characterised in that the second part (9b, 10b) of each wheel (9, 10) has a diameter approximately 0.30 mm larger than the diameter of the first part (9a, 10a) of the corresponding wheel.

13. Device according to one of Claims 6 to 12, characterised in that the second part (9b, 10b) of each wheel (9, 10) forms at least one shoulder.

## Patentansprüche

1. Verfahren zum elektrischen Schweißen von wenigstens zwei als Sandwichbleche bezeichneten vielschichtigen Blechen (2, 5), deren jedes durch wenigstens zwei Metallbleche (3, 4 und 6,7) gebildet wird, die miteinander durch einen Polymerfilm (8) verbunden sind, bei welchem Verfahren man eine teilweise Überdeckung der Sandwichbleche (2, 5) herstellt und die als innere Flächen bezeichneten Oberflächen (3a, 7a) der Sandwichbleche (2, 5) in der Überdeckungszone miteinander in Berührung bringt,
dadurch **gekennzeichnet**, daß
- man an die als äußere Flächen bezeichneten entgegengesetzten Oberflächen (4a, 6a) der Sandwichbleche (2, 5) wenigstens zwei Rollen (9, 10) anlegt, die jeweils durch zwei Teile gebildet werden und in Höhe der Überdeckungszone gegenüberliegend zueinander angeordnet sind, wobei ein erster Teil (9a, 10a) jeder Rolle(9, 10) mit seiner Berührungsfläche an der äußeren Fläche (4a, 6a) eines der Sandwichbleche (2, 5) anliegt und ein gegenüber dem ersten Teil (9a, 10a) erhabener zweiter Teil (9b, 10b) jeder Rolle elektrisch leitfähig ist und gegenüberliegend zu der inneren Fläche (7a, 3a) des anderen Sandwichbleches (5, 2) angeordnet ist,
- man wenigstens den zweiten Teil (9a, 10b) jeder Rolle (9a, 10) mit elektrischer Energie versorgt,
- man über die Rollen (9, 10) eine Klemmkraft auf die Überdeckungszone der Sandwichbleche (2, 5) ausübt, um den zweiten Teil (9b, 10b) jeder der Rollen (9, 10) mit der Innenfläche (7a, 3a) des gegenüberliegenden Sandwichbleches (5, 2) in Berührung zu bringen,
- und man die Rollen (9, 10) längs der Überdeckungszone bewegt.

2. Verfahren nach Anspruch 1, dadurch **gekennzeichnet**, daß der erste Teil (9a, 10a) jeder Rolle (9, 10) ebenfalls elektrisch leitend ist.

3. Verfahren nach Anspruch 1, dadurch **gekennzeichnet**, daß der erste Teil (9a, 10a) jeder Rolle (9a, 10) elektrisch isoliert ist.

4. Verfahren nach einem der vorstehenden Ansprüche, dadurch **gekennzeichnet**, daß man vor dem Anlegen der ersten Teile (9a, 10a) der Rollen (9, 10) an die äußeren Flächen (4a, 6a) der Sandwichbleche (2, 5) eine Biegekraft auf das der Überdeckungszone entgegengesetzte Ende eines Sandwichbleches ausübt, um die Sandwichbleche in eine gemeinsame Ebene zu bringen.

5. Verfahren nach Anspruch 1, dadurch **gekennzeichnet**, daß die Überdeckungszone eine Breite zwischen dem 1,5- und dem 2-fachen der Dicke eines Sandwichbleches (2, 5) hat.

6. Vorrichtung zum elektrischen Schweißen von wenigstens zwei als Sandwichbleche bezeichneten vielschichtigen Blechen (2, 5), zur Durchführung des Verfahrens nach einem der Ansprüche 1 bis 5, mit:
- wenigstens zwei Rollen (9, 10), die jeweils einen ersten Teil (9a, 10a), der dazu bestimmt ist, an eine als äußere Fläche bezeichnete Oberfläche (4a, 6a) eines der Sandwichbleche (2, 5) angelegt zu werden, und einen zweiten Teil (9b, 10b) aufweisen, der gegenüber dem ersten Teil (9a, 10a) erhaben ist und elektrisch leitend ist und dazu bestimmt ist, mit der als Innenfläche bezeichneten entgegengesetzten Oberfläche (7a, 3a) des anderen Sandwichbleches (5, 2) in Berührung gebracht zu werden, wobei die Sandwichbleche miteinander in teilweiser Überdeckung stehen und die Rollen gegenüberliegend zueinander an der Überdeckungszone der Sandwichbleche (2, 5) angeordnet sind,
- Mitteln (15) zur elektrischen Versorgung wenigstens des zweiten Teils (9b, 10b) jeder Rolle (9, 10),
- Mitteln (11, 12) zum Drehantrieb jeder Rolle (9, 10).
- und Mitteln zum Bewegen der Rollen (9, 10) rechtwinklig zu den Sandwichblechen.

7. Vorrichtung nach Anspruch 6, dadurch **gekennzeichnet**, daß der erste Teil (9a, 10a) jeder Rolle (9, 10) ebenfalls elektrisch leitend ist.

8. Vorrichtung nach Anspruch 6, dadurch **gekennzeichnet**, daß der erste Teil (9a, 10a) jeder Rolle (9, 10) elektrisch isoliert ist.

9. Vorrichtung nach Anspruch 6, dadurch **gekennzeichnet**, daß der zweite Teil (9b) der ersten Rolle (9) auf einem Umfangsrand der ersten Rolle (9) und der zweite Teil (10b) der zweiten Rolle (10) auf einem entgegengesetzten Umfangsrand der zweiten Rolle (10) ausgebildet ist.

10. Vorrichtung nach einem der Ansprüche 6 bis 9, dadurch **gekennzeichnet**, daß die beiden Teile (9a, 9b, 10a, 10b) jeder der Rollen (9, 10) eine im wesentlichen zylindrische allgemeine Form haben.

11. Vorrichtung nach Anspruch 10, dadurch **gekennzeichnet**, daß der zweite Teil (9b, 10b) jeder Rolle (9, 10) eine Breite hat, die im wesentlichen gleich einem Drittel der Breite der entsprechenden Rolle (9, 10) ist.

12. Vorrichtung nach Anspruch 10 oder 11, dadurch **gekennzeichnet**, daß der zweite Teil (9b, 10b) jeder Rolle (10) einen Durchmesser hat, der um etwa 0,30 mm größer ist als der Durchmesser des ersten Teils (9a, 10a) der entsprechenden Rolle.

13. Vorrichtung nach einem der Ansprüche 6 bis 12, dadurch **gekennzeichnet**, daß der zweite Teil (9b, 10b) jeder Rolle (9, 10) wenigstens einen Absatz bildet.
